# EUROPÄISCHE PATENTSCHRIFT

(11) **EP 1 102 818 B1**
(45) Veröffentlichungstag und Bekanntmachung des Hinweises auf die Patenterteilung: **02.10.2002**
(21) Anmeldenummer: 99936574.5
(22) Anmeldetag: 20.07.1999
(51) Int. Cl.: C09B 67/34, C09B 67/54

(54) **VERFAHREN ZUR ABTRENNUNG VON CARBONSÄUREN AUS WÄSSRIGEN LÖSUNGEN KATIONISCHER DI- UND TRIARYLMETHANFARBSTOFFE**
METHOD FOR ELIMINATING CARBOXYLIC ACIDS FROM AQUEOUS SOLUTIONS OF CATIONIC DIARYLMETHANE COLORANTS AND TRIARYLMETHANE COLORANTS
PROCEDE POUR LA SEPARATION DES ACIDES CARBOXYLIQUES DES SOLUTIONS AQUEUSES DE COLORANTS CATIONIQUES AU DI- ET TRIARYLMETHANE

(30) Priorität: 08.08.1998 DE 19835967
(43) Veröffentlichungstag der Anmeldung: 30.05.2001
(73) Patentinhaber: BASF AKTIENGESELLSCHAFT, 67056 Ludwigshafen (DE)
(72) Erfinder: GESSNER, Thomas, D-69120 Heidelberg (DE); SCHRÖDER, Gunter-Rudolf, D-68259 Mannheim (DE); REINHARDT, Robert, D-67149 Meckenheim (DE)
(74) Vertreter: Kinzebach, Werner, Dr.
(86) Internationale Anmeldenummer: EP9905165
(87) Internationale Veröffentlichungsnummer: WO00008105

(56) Entgegenhaltungen:
- EP-A- 0 037 382
- EP-A- 0 097 125
- EP-A- 0 197 006
- FR-A- 2 334 720
- FR-A- 2 416 926

## Beschreibung

Die vorliegende Erfindung betrifft ein Verfahren zur Herstellung wäßriger Lösungen kationischer Di- und Triarylmethanfarbstoffe aus ihren wäßrigen Farbstofflösungen, die wasserlösliche organische Lösungsmittel enthalten.

Es ist allgemein bekannt Farbstofflösungen mittels Nanofiltration, die manchmal auch als Ultrafiltration bezeichnet wird, aufzukonzentrieren und gleichzeitig Salze abzutrennen, wie beispielsweise in der EP-A-0 037 382 beschrieben. Dies wird oft bei Azofarbstoffen angewendet, da ihre Herstellung mit einer großen Salzfracht einhergeht.

In der DE-A-2 805 891 wird die Abtrennung von Natriumchlorid mittels Diafiltration von anionischen Farbstoffen und deren Umsalzung zu Farbstoffen mit Aminen als Kationen beschrieben.

Die Herstellung von Flüssigeinstellungen von kationischen Triarylmethanfarbstoffen wirft nach wie vor eine Reihe von Problemen auf, da diese Farbstoffklasse anders als herkömmliche Azofarbstoffe in Gegenwart von wasserlöslichen organischen Lösungsmitteln, oftmals organischen Säuren, hergestellt werden. In den für den Gebrauch bestimmten Flüssigeinstellungen der Farbstoffe sind organische Lösungsmittel, die aufgrund ihrer Flüchtigkeit auch als VOC (volatile organic compounds) bezeichnet werden, unerwünscht. Die Abtrennung eines wasserlöslichen organischen Lösungsmittels ist oftmals nur zusammen mit dem Wasser möglich, so daß eine energieintensive Isolierung des Feststoffs unumgänglich wird, die obendrein noch eine thermische Belastung des Farbstoffs darstellt.

Daher war es Aufgabe der vorliegenden Erfindung, ein wirtschaftlicheres Verfahren zur Herstellung wäßriger Lösungen kationischer Di- und Triarylmethanfarbstoffe zur Verfügung zu stellen.

Demgemäß wurde ein Verfahren zur Abtrennung von Carbonsäuren aus wässrigen Lösungen kationischer Di- und Triarylmethanfarbstoffe gefunden, bei dem man einer wäßrigen Farbstofflösung, die Carbonsäure enthält, eine stärkere Säure als die zu entfernende zusetzt, die Farbstofflösung gegebenenfalls mit Wasser verdünnt und mittels Nanofiltration bei pH ≤ 3 aufkonzentriert.

Gemäß dem erfindungsgemäßen Verfahren werden wasserlösliche organische Lösungsmittel, nämlich Carbonsäuren, abgetrennt. Die Carbonsäuren können aus dem Gegenion des Farbstoffs entstanden sein.

Beispielhaft seien genannt: Ameisensäure, Essigsäure, Propionsäure und Milchsäure.

Das erfindungsgemäße Verfahren ermöglicht die Herstellung wäßriger Lösungen kationischer Di- und Triarylmethanfarbstoffe und wird nicht durch spezielle Substitutionsmuster begrenzt.

Unter kationischen Farbstoffen sind insbesondere Farbstoffe der allgemeinen Formel I 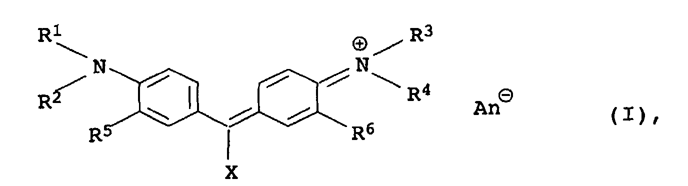 in der
- R¹, R², R³ und R⁴: unabhängig voneinander jeweils C₁-C₈-Alkyl, das gegebenenfalls substituiert ist und durch 1 bis 3 Sauerstoffatome in Etherfunktion unterbrochen sein kann, Phenyl oder C₁-C₄-Alkylphenyl,
- R⁵ und R⁶: unabhängig voneinander jeweils Wasserstoff oder Methyl,
- X: Wasserstoff, gegebenenfalls substituiertes Phenyl oder gegebenenfalls substituiertes Naphthyl und
- An^{⊖}: das Äquivalent eines Anions bedeuten,
zu verstehen, die durch Oxidation der entsprechenden Leukoverbindung der Formel II

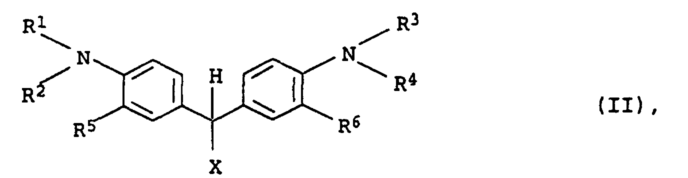

erhalten werden.

Diese Farbstoffe können sowohl geradkettige als auch verzweigte Alkylketten haben, die ferner mit beispielsweise Hydroxy, Chlor, Cyano, Phenyl oder Hydroxysulfonylphenyl substituiert sein können.

Naphthylgruppen können als Substituenten z. B. Amino, Mono- oder Di-(C₁-C₄)-alkylamino, Mono- oder Diphenylamino oder Hydroxysulfonyl tragen.

Phenylgruppen in Formel I können z. B. mit Methyl, Chlor, Amino, Mono- oder Di-(C₁-C₄)-alkylamino, Mono- oder Diphenylamino, Hydroxy, C₁-C₄-Alkoxyl oder Hydroxysulfonyl substituiert sein.

Wenn die Farbstoffe substituierte Alkyl-, Phenyl- oder Naphthylgruppen tragen, sind die Gruppen in der Regel ein- bis dreifach substituiert.

Geeignete Anionen sind z. B. Fluorid, Chlorid, Bromid, Iodid, Hydrogensulfat, Sulfat, Tetrafluoroborat, Formiat, Acetat, Propionat, Mono-, Di- oder Trichloracetat, Lactat, Methoxyacetat, Citrat, Succinat, Methylsulfonat, Benzolsulfonat oder 2- oder 4-Methylbenzolsulfonat.

Wenn die Farbstoffe der Formel I Hydroxysulfonylreste aufweisen und in Salzform vorliegen, kommen als Gegenionen Metall- oder Ammoniumionen in Betracht. Metallionen sind insbesondere die Lithium-, Natrium- oder Kaliumionen. Unter Ammoniumionen im erfindungsgemäßen Sinne sind entweder unsubstituierte oder substituierte Ammoniumkationen zu verstehen.

Farbstoffe der Formel I sind allgemein bekannt. Beispielhaft seien genannt:
Malachitgrün (C.I. 42000 Basic Green 4),
Kristallviolett (C.I. 42555 Basic Violet 3),
Methylviolett (C.I. 42535 Basic Violet 1),
Michlers Hydrolblau,
Brillantgrün (C.I. 42040 Basic Green 1),
Victoriareinblau (C.I. 42595 Basic Blue 7),
Ethylviolett (C.I. 42600 Basic Violet 4) und
Victoria Blau B (C.I. 44045 Basic Blue 26).

Für das erfindungsgemäße Verfahren geeignete Membranen sind herkömmliche auch für die Abtrennung von Salzen geeignete Membranen. Hierbei handelt es sich um organische oder anorganische Porenmembranen, deren Poren einen Durchmesser von 1 bis 500 Å aufweisen. Sie bestehen vorteilhaft aus organischem Material, das ionische Gruppen enthält. Besonders vorteilhaft sind Membranen mit einem "cut off level" von 200 bis 1000 Molekulargewicht.

Um das Permeat durch die Membran zu drücken, werden Drücke von 5 bis 50 bar vorzugsweise 15 bis 25 bar verwendet. Die Membranen weisen in der Regel Permeatflußraten von bis zu 150 l/hm² auf.

Als Membranmaterial sind beispielsweise Polysulfon, Polyethersulfon, Sintermetall, Cellulose, Celluloseacetat, Polyamid, Polyaramid, Polyether, Polyethersulfon, Polytetrafluorethylen, Polyvinylidenfluorid oder Keramik geeignet.

Die Membranen können verschiedene Formen aufweisen, z. B. plattenförmig, blattförmig, röhrenförmig, in Form einer Tasche, eines Konus oder von Hohlfasern vorliegen. Bei starker Druckbelastung können die Membranen natürlich durch Drahtsiebe oder Lochplatten gestützt werden. Innerhalb des weiter oben angegebenen Bereichs kann die Porengrösse durch verschiedenes Tempern variiert und ebenfalls dem jeweiligen Verwendungszweck angepasst werden.

Solche Membranen sind im Handel erhältlich und beispielsweise in der EP-A-0 037 382 beschrieben. Ferner sind derartige Membrantrennprozesse beispielsweise in H. Stratmann. H. Chmiel, Chem.-Ing.-Techn. 57 (1985) 581-596 und W. Pusch, A. Walch, Angew. Chem. 94 (1992) 670-695 ausführlich beschrieben.

Sofern gewünscht oder erforderlich wird die Farbstofflösung mit Wasser verdünnt und anschließend mittels Nanofiltration durch Abtrennen des Permeats, welches ein Gemisch aus Wasser und dem wasserlöslichen organischen Lösungsmittel ist, aufkonzentriert. Die Wassermenge für die Verdünnung ist relativ frei wählbar und lediglich durch die Löslichkeit des Farbstoffs begrenzt. Die Verdünnung darf nicht derart geringfügig sein, daß der Farbstoff während der Nanofiltration ausfällt. In der Regel führt man eine Verdünnung auf 5 bis 30 Gew.-% Farbstoffgehalt durch. Bei der Nanofiltration werden je nach Membrantyp pro m² Filterfläche und Stunde bis zu 100 l Flüssigkeit abgetrennt. Dieses Permeat wird bevorzugt durch Wasser ersetzt. Der Ersatz des Permeats durch Wasser kann dabei sowohl portionsweise als auch kontinuierlich geschehen.

In einer bevorzugten Variante, bei der die Farbstofflösung im Kreis geführt wird und das Permeat kontinuierlich durch Wasser ergänzt wird, gelingt es, bei einer Gesamtpermeatmenge, die der 1 bis 10 fachen Menge der im Kreis geführten Farbstofflösung entspricht, die Menge an wasserlöslichen organischen Lösungsmitteln auf 1 Gew.-% ihrer Ausgangsmenge zu reduzieren.

Das erfindungsgemäße Verfahren ist vor allem zur Abtrennung von Carbonsäuren insbesondere Essigsäure geeignet.

Für die erfindungsgemäße Abtrennung von Carbonsäuren wird ein pH-Wert ≤ 3, vorzugsweise pH 1 bis 3, eingestellt.

Oftmals sind die wasserlöslichen organischen Lösungsmittel synthesebedingt in der Reaktionsmischung enthalten. Beispielsweise werden die Farbstoffe in Gegenwart einer Carbonsäure wie Essigsäure und einem Katalysator mit Sauerstoff oder Wasserstoffperoxid hergestellt und enthalten daher die Carbonsäure. Gemäß einer bevorzugten Verfahrensvariante werden die durch die Oxidation erhaltenen Reaktionsmischungen ohne Zwischenisolierung des Farbstoffs mit einer stärkeren Säure als der zu entfernenden Carbonsäure versetzt, die Mischung gegebenenfalls klärfiltriert, gegebenenfalls mit Wasser verdünnt und nanofiltriert, wobei die beiden letzten Maßnahmen ein- oder mehrfach wiederholt werden können. Die Klärfiltration wird vorteilhaft nach dem Verdünnungsschritt durchgeführt.

Unter stärkerer Säure ist ein niedrigerer pKₛ-Wert der Säure zu verstehen. Starke Säuren können sowohl anorganische als auch organische Säuren sein. Vorzugsweise wählt man Säuren, deren Anionen mit den Triarylmethanfarbstoffen gut wasserlösliche Salze bilden, da man meist konzentrierte Farbstofflösungen herstellen will.

Als stärkere Säuren sind für die Abtrennung von Carbonsäuren beispielsweise Schwefelsäure, Salzsäure, Methansulfonsäure, ortho-Phosphorsäure und Amidosulfonsäure geeignet. Die Säure wird in der Regel in mindestens äquinormaler Menge zum Farbstoff eingesetzt. Sofern nicht der pH-Wert von ≤ 3 erreicht wurde, ist weitere Säurezugabe vorteilhaft.

Nach dem erfindungsgemäßen Verfahren ist es möglich, direkt aus der Synthese erhaltene Farbstofflösungen einzusetzen und aus ihnen wasserlösliche organische Lösungsmittel ohne aufwendige Zwischenisolierung des Farbstoffs zu entfernen. Die so erhaltenen wäßrigen Farbstofflösungen sind stabil und können direkt als Flüssigeinstellung verwendet werden.

Die folgenden Beispiele sollen das erfindungsgemäße Verfahren erläutern.

Die Versuche, die in den Beispielen 1-6 beschrieben werden, wurden mit Hilfe einer Querstromfiltrationsanlage durchgeführt, die mit einem Stapel-Plattenmodul ausgestattet war. Das Modul war mit 10 Flachmembranen bestückt und wies eine effektive Filterfläche von insgesamt 0,044 m² auf. Der erforderliche Betriebsdruck und der Querstrom wurde mit einer Kolbenmembranpumpe erzeugt. Mit Hilfe eines Druckhalteventiles wurde ein Druckgefälle über die Membran von 20 bar eingestellt.

### Beispiel 1

2000 g einer 42 gew.-%igen wäßrigen essigsauren Lösung von Malachitgrun-Acetat mit einem Essigsäuregehalt von 53 Gew.-% wurden mit 6000 g Wasser verdünnt und anschließend über ein Faltenfilter klärfiltriert. Der pH-Wert dieser Lösung betrug 3,0. Mit konzentrierter Schwefelsäure wurde auf pH 2,2 gestellt und über MX 07-Membran der Fa. Osmonics nanofiltriert, wobei die Permeatmenge kontinuierlich durch Wasser ergänzt wurde. Es wurden insgesamt 102 l Permeat abtrennt. Die Permeatflußrate stieg innerhalb der ersten 5 Stunden auf 41 l/hm² (Konditionierung der Membran). Im weiteren Verlauf der Nanofiltration stieg der pH-Wert auf pH 3 an. Dabei fiel die Permeatflußrate auf 18 l/hm². Nach Einstellung des pH-Wertes auf 2 wurde wieder eine maximale Permeatflußrate von 52 l/hm² gefunden. Die Farbstofflösung wurde anschließend durch weitere Nanofiltration ohne Ergänzen des Flüssigkeitsvolumens auf einen Farbstoffgehalt von 33,4 Gew.-% aufkonzentriert. Der Gehalt an Essigsäure betrug 0,32 Gew.-%.

Die folgenden Versuche wurden gemäß Tabelle 1 analog zu Beispiel 1 durchgeführt. Alle Versuche gingen von 2000 g einer 42 gew.-%igen wäßrig-essigsauren Lösung von Malachitgrün-Acetat enthaltend 53 Gew.-% Essigsäure aus. Es wurde x g Wasser zugesetzt. Das Einstellen des pH-Wertes erfolgte mit verschiedenen Säuren. Auf diese Weise wurden die entsprechenden Salze des Farbstoffes erzeugt. Es wurden y l Permeat abgetrennt, die durch Wasser ersetzt wurden, und anschließend auf einen Farbstoffgehalt von c [Gew.-%] aufkonzentriert.

**Tabelle 1**

| Bsp | x [g] | Zugesetzte Säure | pH-Wert | Permeat [l] | c [Gew.-%] | maximale Flußrate l/hm² | Restmenge Essigsäure [Gew.-%] |
|---|---|---|---|---|---|---|---|
| 2 | 6000 | Methansulfonsäure | 2,2 | 45 | 32,0 | 27 | 0,19 |
| 3 | 6000 | ortho-Phosphorsäure | 2,3 | 43 | 30,8 | 22 | 0,21 |
| 4 | 6000 | Amidosulfonsäure | 2,3 | 40 | 34,9 | 18 | 0,22 |
| 5 | 2000 | Schwefelsäure | 2,5 | 35 | 33,0 | 8 | 0,16 |

Die Beispiele 2 - 5 wurden mit derselben Membran durchgeführt. Dies führte von Versuch zu Versuch zu einer asymptotischen Abnahme der Flußrate auf eine Gleichgewichtsflußrate von ca. 18 l/hm². Die Wiederholung des Beispiels 2 nach einer Betriebsdauer der Membran von ca. 180 h zeigte bei pH 2,1 eine maximale Flußrate von 19 l/hm2.

### Beispiel 6

950 g einer Lösung enthaltend 33 Gew.-% des Farbstoffs der Formel 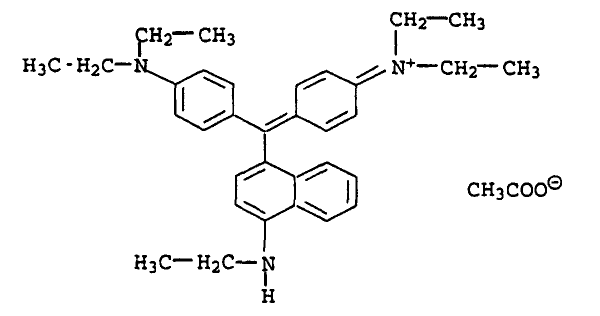 in 18 Gew.-% Essigsäure und 44 Gew.-% Butylglykol wurde mit 5,74 l Wasser verdünnt und durch Filtration von unlöslichen Nebenprodukten befreit. Anschließend wurde diese Farbstofflösung über MPF 21-Membranen (Fa. Weizmann) nanofiltriert, wobei das abgetrennte Flüssigkeitsvolumen durch Wasser ersetzt wurde. Insgesamt wurden 31 l Wasser ersetzt. Während der Nanofiltration stieg der pH-Wert auf 5,0 an, und der Permeatfluß sank von anfänglich 34 l/hm² auf 7 l/hm² ab. Durch Zugabe von Essigsäure wurde der pH auf 3,5 korrigiert, was zu einer Verbesserung des Permeatflusses auf ca. 30 l/hm² führte. Zum Schluß wurde auf ein Volumen von ca. 5 l und ein Farbstoffgehalt von 6,0 Gew.-% eingeengt. Der Butylglykolgehalt dieser Lösung betrug 0,19 % und der Essigsäure-Acetatgehalt 3,2 %.

Die folgenden Versuche wurden in einer Filtrationsanlage durchgeführt, in der Druck und Querstrom mit Hilfe einer mehrstufigen Zentrifugalpumpe erzeugt wurden.

### Beispiel 7

200 kg Farbstofflösung (41,7 Gew.-% Malachitgrün-Acetat, 52,6 Gew.-% Essigsäure) wurden mit 400 kg Wasser verdünnt und mit 14,5 kg konz. Schwefelsäure auf pH 2 gestellt. Nach Filtration wurde die wäßrige Farbstofflösung (17,1 Gew.-% Essigsäure/Acetat, pH 2) bei 30°C über ein Wickelmodul (Membran MX07 der Fa. Osmonics, Membranfläche ca. 1 m²) nanofiltriert. Bei einem mittleren Betriebsdruck am Modul von 22 - 25 bar und einem Konzentratfluß von 1,9 - 3,5 m³/h wurde ein Permeatfluß von ca. 27 - 30 l/hm² erhalten. Abgetrenntes Permeat wurde während der Nanofiltration durch vollentsalztes Wasser ersetzt; die Farbstofflösung wurde durch Zusetzen von konz. Schwefelsäure (insgesamt 3,4 kg) bei pH 1,9 - 2,4 gehalten. Nach 58 h Nanofiltration betrug der Gehalt an Essigsäure/Acetat 1,3 Gew.-%. Es wurden insgesamt 1932 kg Permeat erhalten. Anschließend wurde die wäßrige Farbstofflösung in 24 h bis zum Absinken des Permeatflusses auf 3,0 l/hm² aufkonzentriert. Dabei wurden weitere 484 kg Permeat erhalten. Der Essigsäure/Acetat-Gehalt der aufkonzentrierten wäßrigen Malachitgrün-Lösung (pH 2,6) betrug 2,0 Gew.-%; im Gasraum des Farbstoffbehälters wurden bei 25 °C 4,3 mg Essigsäure je m³ (entsprechend 0,4 mg Kohlenstoff/m³ bei 0 °C) gefunden. Die auf diese Weise erhaltenen 120 kg Farbstofflösung enthielten 80 kg Malachitgrün-Sulfat und 1,6 kg Essigsäure.

### Beispiel 8

100 kg Farbstofflösung (41,7 Gew.-% Malachitgrün-Acetat, 52.6 Gew.-% Essigsäure) wurden mit 600 kg Wasser verdünnt und mit 8,0 kg konz. Schwefelsäure auf pH 2 gestellt. Nach Filtration wurde die wäßrige Farbstofflösung, pH 2, (9,9 Gew.-% Essigsäure/Acetat in der Lösung; im Gasraum 263 mg Essigsäure je m³ bei 30 °C entsprechend 18,8 mg Kohlenstoff/m³ bei 0 °C) bei 30 °C über ein Wickelmodul (Membran MX07 der Fa. Osmonics, Membranfläche ca. 1 m²) nanofiltriert. Bei einem mittleren Betriebsdruck am Modul von 22 bar und einem Konzentratfluß von 3,4 - 3,7 m³/h wurde ein Permeatfluß von ca. 28 - 36 l/hm² erhalten. Abgetrenntes Permeat wurde während der Nanofiltration durch vollentsalztes Wasser ersetzt; die Farbstofflösung wurde durch Zusetzen von konz. Schwefelsäure (insgesamt 1,6 kg) bei pH 2,0 - 2,6 gehalten. Nach 48 h Nanofiltration betrug der Gehalt an Essigsäure/Acetat 0,66 Gew.-% (im Gasraum 30,6 mg Essigsäure je m³ bei 30 °C entsprechend 2,2 mg Kohlenstoff/m³ bei 0 °C). Es wurden insgesamt 1886 kg Permeat erhalten. Anschließend wurde die wäßrige Farbstofflösung in 24 h bis zum Absinken des Permeatflusses auf 1,5 l/hm² aufkonzentriert. Dabei wurden 555 kg Permeat erhalten. Der Essigsäure/Acetat-Gehalt der aufkonzentrierten wäßrigen Malachitgrün-Lösung (pH 2,6) betrug 2,0 Gew.-%; im Gasraum des Farbstoffbehälters wurden bei 25 °C 14.4 mg Essigsäure je m³ (entsprechend 1.3 mg Kohlenstoff/m³ bei 0 °C) gefunden. Es wurden 145 kg Farbstofflösung mit 40 kg Malachitgrün-Sulfat und 2,9 kg Essigsäure erhalten.

### Beispiel 9

100 kg Farbstofflösung (45,8 kg Kristallviolett-Acetat, 32,9 Gew.-% Essigsäure) wurden mit 400 kg Wasser verdünnt und mit 10,8 kg konz. Schwefelsäure auf pH 2,2 gestellt. Nach Filtration wurde die wäßrige Farbstofflösung (pH 2,2, 7,2 Gew.-% Essigsäure/Acetat in der Lösung; im Gasraum 1780 mg Essigsäure je m³ bei 40 °C entsprechend 78,5 mg Kohlenstoff/m³ bei 0 °C) bei 40 °C über ein Rohrmodul (Membran MPT-36 der Fa. Weizmann) nanofiltriert. Bei einem mittleren Betriebsdruck am Modul von 27 bar und einem Konzentratfluß von 1,0 - 1,1 m³/h wurde ein Permeatfluß von ca. 31 - 40 l/hm² erhalten. Abgetrenntes Permeat wurde während der Nanofiltration durch vollentsalztes Wasser ersetzt. Nach 38 h Nanofiltration betrug der Gehalt an Essigsäure/Acetat 2,1 Gew.-% (im Gasraum 510 mg Essigsäure je m³ bei 40 °C entsprechend 22,5 mg Kohlenstoff/m³ bei 0 °C). Es wurden insgesamt 1032 kg Permeat erhalten. Anschließend wurde die wäßrige Farbstofflösung in 31 h bis zum Absinken des Permeatflusses auf 4,8 l/hm² aufkonzentriert. Dabei wurden 392 kg Permeat erhalten. Der Essigsäure/Acetat-Gehalt der aufkonzentrierten wäßrigen Kristallviolett-Lösung (pH 2,8) betrug 2,6 Gew.-%; im Gasraum des Farbstoffbehälters wurden bei 40 °C 230 mg Essigsäure je m³ (entsprechend 10,2 mg Kohlenstoff/m³ bei 0°C) gefunden. Die auf diese Weise erhaltenen 108 kg Farbstofflösung erhielten 40 kg Kristallviolett-Sulfat und 2,8 kg Essigsäure.

## Patentansprüche

1. Verfahren zur Abtrennung von Carbonsäuren aus wässrigen Lösungen kationischer Di- und Triarylmethanfarbstoffe, bei dem man einer wäßrigen Farbstofflösung, die Carbonsäure enthält, eine stärkere Säure als die zu entfernende zusetzt, die Farbstofflösung gegebenenfalls mit Wasser verdünnt und mittels Nanofiltration bei pH ≤ 3 aufkonzentriert.

2. Verfahren nach Anspruch 1, **dadurch gekennzeichnet, dass** man mittels Nanofiltration Essigsäure abtrennt.

3. Verfahren nach Anspruch 1 oder 2, **dadurch gekennzeichnet, dass** man den Farbstoff durch Oxidation herstellt und ohne Zwischenisolierung die stärkere Säure zusetzt, gegebenenfalls klärfiltriert, gegebenenfalls mit Wasser verdünnt und mittels Nanofiltration aufkonzentriert.

## Claims

1. A process for removing carboxylic acids from aqueous solutions of cationic di- and triarylmethane dyes, which comprises an aqueous dye solution comprising carboxylic acid being admixed with a stronger acid than that to be removed and the dye solution being optionally diluted with water and concentrated by nanofiltration at pH ≤ 3.

2. A process as claimed in claim 1 , wherein acetic acid is removed by nanofiltration.

3. A process as claimed in claim 1 or 2, wherein the dye is synthesized by oxidation and, without intermediary isolation, admixed with a stronger acid, optionally clarified, optionally diluted with water and concentrated by nanofiltration.

## Revendications

1. Procédé pour la séparation d'un acide carboxylique à partir des solutions aqueuses de colorants diarylméthane et triarylméthane cationiques, lors duquel on ajoute à une solution aqueuse de colorant, contenant l'acide carboxylique, un acide qui est plus fort que l'acide destiné à être séparé, on soumet éventuellement la solution de colorants à une dilution en employant de l'eau et on augmente la concentration par nanofiltration, en procédant à un pH ≤ 3.

2. Procédé selon la revendication 1, **caractérisé en ce que** l'on procède à une séparation de l'acide acétique, par nanofiltration.

3. Procédé selon la revendication 1 ou 2, **caractérisé en ce que** l'on prépare le colorant au moyen d'une oxydation et **en ce que** l'on ajoute l'acide le plus fort sans isolement intermédiaire, **en ce que** l'on réalise éventuellement une filtration de clairance et qu'éventuellement l'on procède à une dilution en employant de l'eau, et **en ce que** l'on augmente la concentration au moyen d'une nanofiltration.
